# EUROPEAN PATENT APPLICATION

(11) **EP 4 183 668 A1**
(43) Date of publication of application: **24.05.2023**
(21) Application number: 21841794.7
(22) Date of filing: 05.02.2021
(51) Int. Cl.: B62D 101/00, B62D 119/00, B62D 3/08, B62D 6/00, B62D 5/04, B62D 5/083

(54) **STEERING DEVICE**

(30) Priority: 16.07.2020 JP 2020122421
(71) Applicant: Knorr-Bremse Steering System Japan Ltd., Hiki-gun Saitama 3550812 (JP)
(72) Inventor: MOCHIZUKI, Shigeru, Hiki-gun, Saitama 355-0812 (JP); WATANABE, Masaki, Hiki-gun, Saitama 355-0812 (JP); MATSUMURA, Tatsuo, Hiki-gun, Saitama 355-0812 (JP)
(74) Representative: LifeTech IP Spies & Behrndt Patentanwälte PartG mbB
(86) International application number: PCT/JP2021/004208
(87) International publication number: WO 2022/014073

(57) **Abstract**

In an EPS controller (3), a first automatic steering command (B) is generated based on a steering angle command (θrc) and a steering angle (θr), and is output to a line (CL2). The first automatic steering command (B) is converted into a second steering command (D) by an adder (56) adding a steering command signal correction value (C). The steering command signal correction value (C) is set based on a manufacturing error of a power cylinder (6) and a rotary valve (16) of a steering device. A motor command signal generation unit (59) generates a target current (Iq*, Id*) based on the second steering command (D) and the number of motor rotations (Nm).

## Description

### TECHNICAL FIELD

The present invention relates to a steering device.

### BACKGROUND ART

As a steering device, for example, a steering device disclosed in Patent Document 1 as follows is known.

The steering device disclosed in Patent Document 1 includes a steering mechanism that transmits a steering force from a driver, and a turning mechanism that turns turning wheels in accordance with the steering force. The turning mechanism is provided with a power cylinder capable of applying a turning force to the turning wheels. A hydraulic fluid is supplied to the power cylinder through a rotary valve.

In general, the power cylinder and the rotary valve constituted by a plurality of components include manufacturing errors in an assembled state, and such manufacturing errors are different from errors for each individual product. For this reason, there is a concern that, even when the steering force input to the steering mechanism is the same among products of the steering device, the turning mechanism has a variation in the turning force corresponding to the manufacturing error of each individual product, that is, a variation in the output characteristics.

### Citation List

### Patent Document

Patent Document 1: JP 2015-9682 A

### SUMMARY OF THE INVENTION

The present invention has been made in view of the known circumstances, and an object of the present invention to provide a steering device capable of suppressing a variation in output characteristics among products.

### MEANS FOR SOLVING THE PROBLEM

According to one aspect of the present invention, a steering command signal correction unit corrects a first steering command signal based on a steering command signal correction value to generate a second steering command signal.

According to the present invention, it is possible to suppress a variation in output characteristics among products of a steering device.

### BRIEF DESCRIPTION OF DRAWINGS

FIG. 1 is a longitudinal cross-sectional view of a steering device according to a first embodiment.
FIG. 2 is a partially enlarged cross-sectional view of the steering device in FIG. 1.
FIG. 3 is a control block diagram of an EPS controller in FIG. 1.
FIG. 4(a) is a graph showing output torque with respect to input torque to a steering shaft, and
FIG. 4(b) is a graph showing a steering command signal correction value with respect to the input torque to the steering shaft.
FIG. 5 is a control block diagram of an EPS controller according to a second embodiment.
FIG. 6 is a control block diagram of an EPS controller according to a third embodiment.
FIG. 7 is a graph according to the third embodiment showing a steering command signal correction value with respect to an input torque to a steering shaft in the third embodiment.
FIG. 8 is a graph according to a fourth embodiment showing a steering command signal correction value with respect to input torque to a steering shaft in the fourth embodiment.
FIG. 9 is a graph according to a fifth embodiment showing a steering command signal correction value with respect to input torque to a steering shaft in the fifth embodiment.
FIG. 10 is a graph according to a sixth embodiment showing a steering command signal correction value with respect to input torque to a steering shaft in the sixth embodiment.
FIG. 11 is a graph according to a seventh embodiment showing a steering command signal correction value with respect to input torque to a steering shaft in the seventh embodiment.
FIG. 12 is a graph according to an eighth embodiment showing a steering command signal correction value with respect to input torque to a steering shaft in the eighth embodiment.
FIG. 13 is a control block diagram of an EPS controller according to a ninth embodiment.
FIG. 14 is a graph according to the ninth embodiment showing a steering command signal correction value with respect to input torque to a steering shaft in the ninth embodiment.
FIG. 15 is a control block diagram of an EPS controller according to a tenth embodiment.

### DESCRIPTION OF EMBODIMENTS

Hereinafter, embodiments of a steering device of the present invention will be described with reference to the drawings.

### First Embodiment

### Configuration of Steering Device

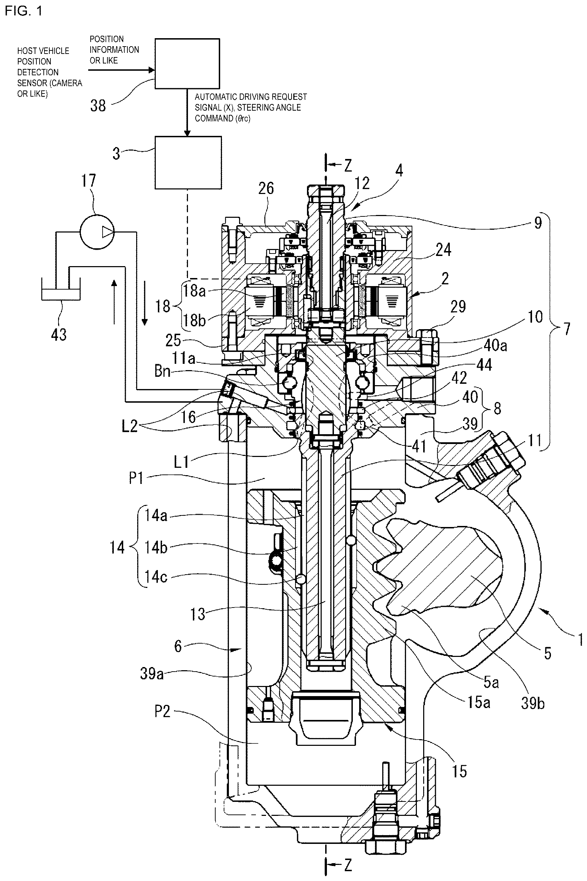

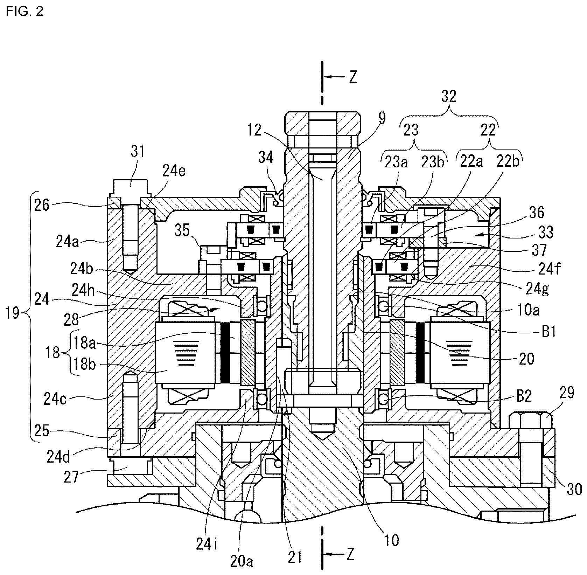

FIG. 1 is a longitudinal cross-sectional view of a steering device according to a first embodiment. FIG. 2 is a partially enlarged cross-sectional view of a portion including an electric motor 2 in the steering device of FIG. 1. In FIG. 1, for convenience of description, a side (upper side in the drawing) linked to a steering wheel (not illustrated) in a rotation axis Z-direction of a steering shaft 7 is referred to as "one end", and a side (lower side in the drawing) linked to a piston 15 is referred to as "the other end".

The steering device is an integral type steering device used for a large-sized vehicle or the like, and mainly includes a steering device body 1, an electric motor 2, and an EPS controller (ECU) 3.

The steering device body 1 includes a steering mechanism 4, a sector shaft 5, and a power cylinder 6.

The steering mechanism 4 is used to input a rotational force from the steering wheel (not illustrated) and includes the steering shaft 7. The steering shaft 7 is partially accommodated in a housing 8 and includes an input shaft 9, an intermediate shaft 10 and an output shaft 11. One end side of the input shaft 9 is linked to the steering wheel, and is used to input steering torque by a driver. The other end portion of the input shaft 9 is inserted into an opening recess portion 10a formed on one end side of the intermediate shaft 10. The intermediate shaft 10 is coupled to the input shaft 9 through a first torsion bar 12 so as to be rotatable relative to the input shaft 9, and is used to input driving torque of the electric motor 2 coupled to the outer periphery of the intermediate shaft 10. The intermediate shaft 10 is inserted into an opening recess portion 11a formed in an expanded diameter portion on one end side of the output shaft 11. One end side of the output shaft 11 is relatively rotatably coupled to the intermediate shaft 10 through a second torsion bar 13, and the steering torque input by the intermediate shaft 10 is output to the piston 15 through a ball screw mechanism 14 which is a conversion mechanism.

The ball screw mechanism 14 includes the output shaft 11 as a screw shaft having a ball groove 14a being a spiral groove, which is formed in the outer peripheral portion on the other end side, the piston 15 as a nut, which is provided on the outer peripheral side of the output shaft 11 and has a ball groove 14b being a spiral groove corresponding to the ball groove 14a formed in the inner peripheral portion, and a plurality of balls 14c provided between the piston 15 and the output shaft 11.

A known rotary valve 16 as a control valve is provided between the intermediate shaft 10 and the output shaft 11. The rotary valve 16 selectively supplies a hydraulic fluid supplied by a pump device 17 mounted in a vehicle to first and second fluid chambers (pressure chambers) P1 and P2 in accordance with the amount and direction of torsion of the second torsion bar 13 derived from the relative rotation angles of the intermediate shaft 10 and the output shaft 11.

The sector shaft 5 is used to turn by the axial movement of the piston 15 provided on the outer periphery of the other end side of the steering shaft 7. The sector shaft 5 is linked to a turning wheel through a Pitman arm (not illustrated).

The ball screw mechanism 14, the sector shaft 5, and the Pitman arm constitute a transmission mechanism that converts a rotational force (steering force) input to the steering shaft 7 into a turning force of the turning wheel. When the steering device is configured without using the ball screw mechanism 14 or the like, for example, a rack bar, a pinion shaft, or the like constituting a rack and pinion mechanism can be used as the transmission mechanism.

The power cylinder 6 is configured in a manner that the cylindrical piston 15 slidably accommodated in the housing 8 defines the first fluid chamber P1 and a second fluid chamber P2 as a pair of fluid chambers. The power cylinder 6 is a hydraulic actuator that generates assist torque for assisting steering torque.

The electric motor (hollow motor) 2 is configured as a three-phase AC brushless motor that applies rotational torque to the input shaft 9. The electric motor 2 includes a motor element 18 including a motor rotor 18a and a motor stator 18b, a motor housing 19 accommodating the motor element 18, and a first bearing B1 and a second bearing B2 that rotatably support a coupling member 20. The coupling member 20 is fixed to the intermediate shaft 10 through a known key connection in which a key 21 formed to protrude on the outer peripheral portion of the intermediate shaft 10 is fitted into a groove 20a formed on the inner peripheral surface of the coupling member 20. By the key connection, the coupling member 20 can rotate integrally with the intermediate shaft 10.

The motor rotor 18a is attached to the outer peripheral portion of the input shaft 9 through the tubular coupling member 20 so as to be integrally rotatable therewith. The motor stator 18b is disposed on the outer peripheral side of the motor rotor 18a with a predetermined gap therebetween, and is electrically connected to the EPS controller 3 outside the housing 8.

Instead of the electric motor 2 which is a hollow motor, or in addition to the electric motor 2, an electric motor capable of applying assist torque to the steering shaft 7 through a reduction gear having a worm shaft or a worm wheel may be used.

The motor housing 19 is formed of a metal material, for example, an aluminum alloy. The motor housing 19 includes a housing body 24 that has a bottomed cylindrical shape and accommodates the motor element 18 and first and second resolvers 22 and 23 (described later), a first closing portion 25 that closes an opening of the housing body 24 from the electric motor 2 side, and a second closing portion 26 that closes an opening of an extension portion 24a from the opposite side to the electric motor 2.

The housing body 24 includes a substantially disc-shaped bottom portion 24b formed so that the input shaft 9 and the coupling member 20 can be inserted, a cylindrical portion 24c that rises from the outer peripheral edge portion of the bottom portion 24b to the other end side of the steering shaft 7, and the cylindrical extension portion 24a that rises from the outer peripheral edge portion of the bottom portion 24b to the one end side of the steering shaft 7.

The opening of the cylindrical portion 24c is closed by the substantially disc-shaped first closing portion 25 formed so that the input shaft 9 and the coupling member 20 can be inserted therein. The first closing portion 25 is attached and fixed to an opening end surface 24d of the cylindrical portion 24c through a fixing member, for example, a bolt 27. A space surrounded by the first closing portion 25, the bottom portion 24b, the cylindrical portion 24c, and the coupling member 20 serves as a motor accommodation portion 28 for accommodating the motor element 18. The first closing portion 25 is attached and fixed to an adapter member 30 by a fixing member, for example, a bolt 29. The first closing portion 25 is fixed to the housing 8 through the adapter member 30.

Further, the opening of the extension portion 24a is closed by a substantially disc-shaped second closing portion 26 formed so that the input shaft 9 and the coupling member 20 can be inserted therein. The second closing portion 26 is attached and fixed to an opening end surface 24e of the extension portion 24a through a fixing member such as a bolt 31. A space surrounded by the second closing portion 26, the bottom portion 24b, the extension portion 24a, and the input shaft 9 serves as a torque sensor accommodation portion 33 for accommodating a torque sensor 32 used to calculate steering torque Tr generated in the first torsion bar 12. A gap between the second closing portion 26 and the input shaft 9 is airtightly sealed by an annular seal member 34.

The torque sensor 32 includes the first resolver 22 provided on the outer peripheral side of the coupling member 20 in the torque sensor accommodation portion 33 and the second resolver 23 provided on the outer peripheral side of the input shaft 9 in the torque sensor accommodation portion 33.

The first resolver 22 includes a first resolver rotor 22a fixed to the outer periphery of one end side of the coupling member 20 and a first resolver stator 22b that is provided on the outer peripheral side of the first resolver rotor 22a and is attached and fixed to the bottom portion 24b by a fixing member, for example, a screw member 35. The first resolver stator 22b is attached and fixed to the bottom portion 24b by the screw member 35 in a state of abutting on an inner peripheral surface 24g of a thick portion 24f of the bottom portion 24b overlapping with the sector shaft 5 in the rotation axis Z-direction of the steering shaft 7. The first resolver stator 22b is electrically connected to the EPS controller 3 via an o output wire (not illustrated). An intermediate shaft rotation angle θa (described later) of the intermediate shaft 10 detected by the first resolver 22 is input to the EPS controller 3.

The second resolver 23 includes a second resolver rotor 23a fixed to the outer periphery of the input shaft 9 at a position closer to one end side than the first resolver stator 22b, and a second resolver stator 23b that is provided on the outer peripheral side of the second resolver rotor 23a and is attached and fixed to the thick portion 24f through a spacer 37 by a fixing member such as a screw member 36. Similar to the first resolver stator 22b, the second resolver stator 23b is electrically connected to the EPS controller 3 via an output line (not illustrated). An input shaft rotation angle θh (described later) of the input shaft 9 detected by the second resolver 23 is input to the EPS controller 3.

The torque sensor 32 constituted by the first and second resolvers 22 and 23 calculates the steering torque Tr by multiplying the difference between the input shaft rotation angle θh of the input shaft 9 detected by the second resolver 23 and the intermediate shaft rotation angle θa of the intermediate shaft 10 detected by the first resolver 22 by a torsion spring constant g1 of the first torsion bar 12.

In the first and second resolver 22 and 23, the first and second resolver stators 22b and 23b output a sine wave signal and a cosine wave signal that satisfy "amplitude numberAx per rotation of first resolver rotor 22a < 360°/(predetermined angle θx × 2)". The EPS controller 3 calculates the rotation angles of the input shaft 9, the electric motor 2, and the like based on the output signals.

The first bearing B1 is provided on the inner peripheral surface of an annular first bearing holding portion 24 h formed to protrude from the vicinity of the inner peripheral edge portion of the bottom portion 24b to the other end side of the steering shaft 7, and rotatably supports one end side of the coupling member 20.

Similarly, the second bearing B2 is provided on the inner peripheral surface of an annular second bearing holding portion 24i formed to protrude from the vicinity of the inner peripheral edge portion of the first closing portion 25 so as to face the first bearing holding portion 24h, and rotatably supports the other end side of the coupling member 20.

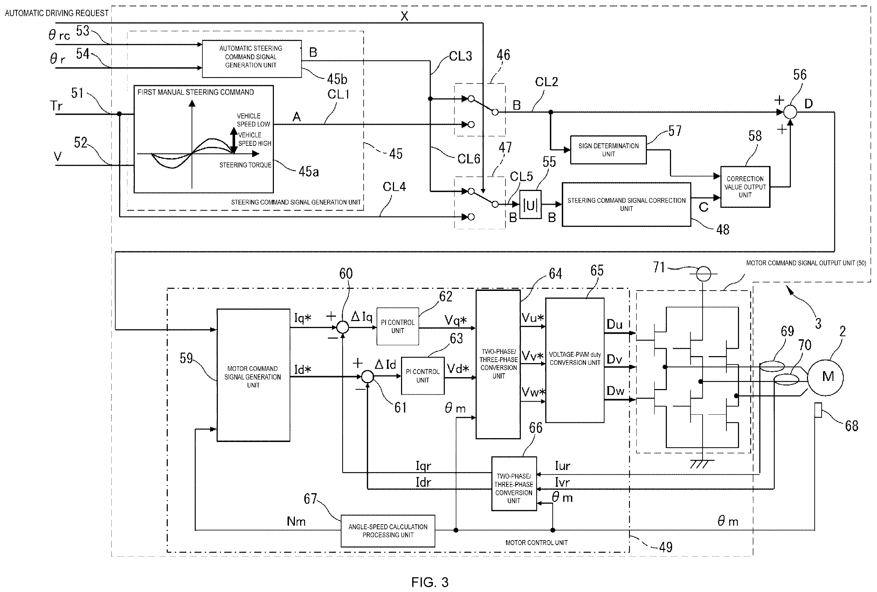

The EPS controller 3 is configured to include electronic components such as a microcomputer. The EPS controller 3 is electrically connected to an ADAS controller 38 that is used to control automatic driving (automatic steering) of a vehicle, for example, parking and lane keeping when the driver turns on an automatic driving switch. The EPS controller 3 drives and controls the electric motor 2 based on the steering torque Tr and the vehicle speed V (see FIG. 3) in the case of manual steering based on the input of the steering torque Tr from the driver, and drives and controls the electric motor 2 based on the steering angle θr (see FIG. 3) in the case of automatic steering. The EPS controller 3 corresponds to a "controller" described in the claims.

The ADAS controller 38 grasps a surrounding situation of the vehicle based on a detection signal from a radar (for example, a millimeter wave laser or an infrared laser) which is not illustrated, an image from a camera which is not illustrated, or the like, and grasps a host vehicle position based on host vehicle position information from a GPS or the like. When, for example, lane keeping of the vehicle is performed during automatic steering, the ADAS controller 38 calculates a steering angle command θrc (see FIG. 3) as a target steering angle for maintaining the vehicle in a predetermined lane, based on the surrounding situation and the host vehicle position. When the driver turns on the automatic driving switch, the ADAS controller 38 generates an automatic driving request signal X and transmits the signal to the EPS controller 3 in CAN communication.

The housing 8 has a cylindrical shape with one end side opened and the other end side closed, and includes a first housing 39 defining the first and second fluid chambers P1 and P2, and a second housing 40 that is provided to close the one end opening of the first housing 39 and accommodates the rotary valve 16 therein. The first and second housings 39 and 40 are fastened to each other by a plurality of fixing means (not illustrated), for example, bolts, appropriately provided on the outer peripheral portions of the first and second housings.

A power cylinder body 39a formed in the rotation axis Z-direction of the steering shaft 7 and a shaft accommodation portion 39b formed to be perpendicular to the power cylinder body 39a and to partially face the power cylinder body 39a are provided inside the first housing 39. The piston 15 linked to the output shaft 11 is accommodated in the power cylinder body 39a, so that the first fluid chamber P1 on one end side and the second fluid chamber P2 on the other end side are defined by the piston 15. In the shaft accommodation portion 39b, the sector shaft 5 is accommodated in which one end side in an axial direction is linked to the piston 15 and the other end side is linked to the turning wheel through a pitman arm (not illustrated).

The outer peripheral portions of the piston 15 and the sector shaft 5 are provided with tooth portions 15 a and 5 a that can be engaged with each other. The sector shaft 5 rotates in accordance with the axial movement of the piston 15 caused by the engagement between the two tooth portions 15a and 5a. Thus, the Pitman arm is pulled in the lateral direction of the vehicle body to change the direction of the turning wheel. At this time, the hydraulic fluid in the first fluid chamber P1 is introduced into the shaft accommodation portion 39b, thereby lubricating the space between the two tooth portions 15a and 5a.

On the inner peripheral side of the second housing 40, a shaft insertion hole 40a, into which the intermediate shaft 10 and the output shaft 11 that overlap each other are inserted, penetrates from one end side to the other end side along the rotation axis Z-direction in a stepped reduced diameter shape. A bearing Bn for rotatably supporting the output shaft 11 is provided in the large-diameter portion on one end side. On the other hand, at the small-diameter portion on the other end side, an introduction port 41 for communicating with the pump device 17, a supply/discharge port 42 for supplying and discharging the hydraulic pressure introduced from the introduction port 41 to the fluid chambers P1 and P2, and a discharge port 44 for discharging the hydraulic fluid discharged from the fluid chambers P1 and P2 to a reservoir tank 43 through the supply/discharge port 42. The supply/discharge port 42 communicates with the first fluid chamber P1 through a first supply/discharge passage L1 provided in the expanded diameter portion on one end side of the output shaft 11, and communicates with the second fluid chamber P2 through a second supply/discharge passage L2 provided in the first housing 39.

With this configuration, in the steering device, when the driver steers the steering wheel, the hydraulic fluid pumped by the pump device 17 is supplied, via the rotary valve 16, to one of the fluid chambers P1 and P2 according to the steering direction, and the hydraulic fluid (excess part) corresponding to the supply amount is discharged from the other of the fluid chambers P1 and P2 to the reservoir tank 43. As a result of the piston 15 being driven by the fluid pressure, assist torque based on the fluid pressure acting on the piston 15 is applied to the sector shaft 5.

FIG. 3 is a control block diagram of the EPS controller 3 in FIG. 1. For convenience of description, FIG. 3 illustrates a state where first and second switching units 46 and 47 are connected in an automatic steering mode.

The EPS controller 3 mainly includes a steering command signal generation unit 45, the first switching unit 46, the second switching unit 47, a steering command signal correction unit 48, a motor control unit 49, and a motor command signal output unit 50.

The steering command signal generation unit 45 includes a manual steering command signal generation unit 45a that generates a first manual steering command signal (referred to as a " first manual steering command" below) A that is a torque command signal for manual steering, and an automatic steering command signal generation unit 45b that generates a first automatic steering command signal (referred to as a "first automatic steering command" below) B that is a torque command signal for automatic steering.

The interface of the EPS controller 3 is provided with a steering torque signal reception unit 51, a vehicle speed signal reception unit 52, a steering angle command signal reception unit 53, and a steering angle signal reception unit 54 as external inputs.

The steering torque signal reception unit 51 receives a steering torque signal (referred to as "steering torque" below) Tr output from the torque sensor 32 (see FIG. 2).

The vehicle speed signal reception unit 52 receives a vehicle speed signal (referred to as a "vehicle speed" below) V output from a vehicle speed sensor (not illustrated).

The steering angle command signal reception unit 53 receives a steering angle command signal (referred to as a "steering angle command" below) θrc that is output from the ADAS controller 38 and is a signal related to a target steering angle of the steering shaft 7.

The steering angle signal reception unit 54 receives a steering angle signal (referred to as a "steering angle" below) Tr which is detected by a steering angle sensor (not illustrated) and is a signal related to an actual steering angle applied to the steering shaft 7.

The manual steering command signal generation unit 45a generates the first manual steering command A based on the steering torque Tr detected by the torque sensor 32 and the vehicle speed V detected by the vehicle speed sensor. That is, the manual steering command signal generation unit 45a generates the first manual steering command A by referring to a map illustrated in FIG. 3 that represents the correlation between the steering torque Tr, and the vehicle speed V and the first manual steering command A.

The automatic steering command signal generation unit 45b is configured as a PI control unit (proportional integral control unit). When the automatic driving request signal X is generated by the ADAS controller 38, the automatic steering command signal generation unit 45b calculates a deviation between the steering angle command θrc output from the ADAS controller 38 and the steering angle θr detected by the steering angle sensor (not illustrated), and performs proportional integration to generate the first automatic steering command B.

The first manual steering command A and the first automatic steering command B correspond to a "first steering command signal" described in the claims.

The first switching unit 46 performs switching between a manual steering mode and the automatic steering mode based on whether or not the automatic driving request signal X is input to the EPS controller 3. When the automatic driving request signal X is not input, the first switching unit 46 determines that the steering mode is the manual steering mode, connects a line CL1 and a line CL2, and outputs the first manual steering command A to the line CL2. On the other hand, when the driver turns on the automatic driving switch to input the automatic driving request signal X as illustrated in FIG. 3, the first switching unit 46 determines that the steering mode is the automatic steering mode, connects a line CL3 and a line CL2, and outputs the first automatic steering command B to the line CL2.

Similarly, the second switching unit 47 performs switching between the manual steering mode and the automatic steering mode based on whether or not the automatic driving request signal X is input to the EPS controller 3. When the automatic driving request signal X is not input, the second switching unit 47 determines that the steering mode is the manual steering mode, connects a line CL4 and a line CL5, and outputs the steering torque Tr to an absolute-value generation unit 55. On the other hand, when the driver turns on the automatic driving switch to input the automatic driving request signal X as illustrated in FIG. 3, the second switching unit 47 determines that the steering mode is the automatic steering mode, connects a line CL6 and a line CL5, and outputs the first automatic steering command B to the absolute-value generation unit 55.

Since the process of generating a second steering command D (described later) based on the first manual steering command A and the process of generating the second steering command D based on the first automatic steering command B are basically the same process, the latter process will be described below as a representative.

The first automatic steering command B output through the first switching unit 46 is input to an adder 56 and to a sign determination unit 57. The sign determination unit 57 determines the positive or negative sign of the first automatic steering command B. The determination result of the sign determination unit 57 is input to a correction value output unit 58.

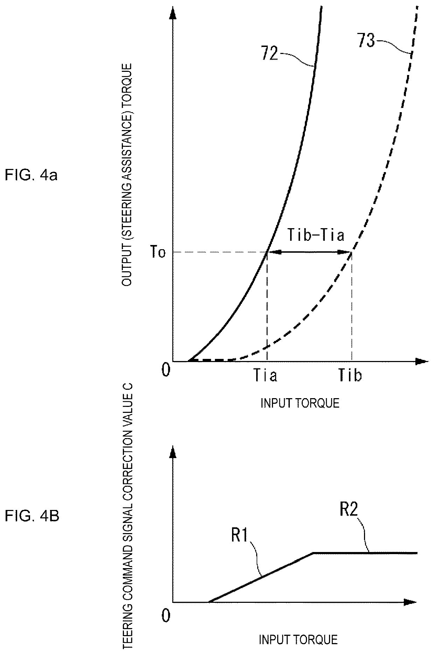

The first automatic steering command B output through the second switching unit 47 is converted into an absolute value by the absolute-value generation unit 55. That is, the first automatic steering command B takes a positive value by the absolute-value generation unit 55. The first automatic steering command B which is a positive value is input to the steering command signal correction unit 48. The steering command signal correction unit 48 generates a steering command signal correction value C based on the first automatic steering command B. The steering command signal correction value C is generated in accordance with an output of the power cylinder 6 with respect to a third steering command signal when the third steering command signal is input to the electric motor 2. A signal output from the EPS controller 3 is used as the third steering command signal. When the command signal for the electric motor 2 is corrected in a factory, the third steering command signal may be output from a facility in the factory to the electric motor 2. A method of calculating the steering command signal correction value C will be described later with reference to FIGS. 4(a) and 4(b). The steering command signal correction value C is input to the correction value output unit 58.

In the adder 56, a second steering command signal (referred to as a "second steering command" below) D is generated by adding the steering command signal correction value C output from the steering command signal correction unit 48 to the first automatic steering command B output through the first switching unit 46.

The motor control unit 49 includes a motor command signal generation unit 59, first and second subtractors 60 and 61, first and second PI control units 62 and 63, a two-phase/three-phase conversion unit 64, a voltage-PWM duty conversion unit 65, a three-phase/two-phase conversion unit 66, and an angle-speed calculation processing unit 67.

The motor command signal generation unit 59 generates a q-axis target current Iq* that is a motor command signal, and a d-axis target current Id* that is also a motor command signal, based on the second steering command D and the number of motor rotations Nm output from the angle-speed calculation processing unit 67.

The first subtractor 60 subtracts a q-axis actual current Iqr output from the three-phase/two-phase conversion unit 66 from the q-axis target current Iq* to generate a q-axis current deviation ΔIq.

The second subtractor 61 subtracts a d-axis actual current Idr output from the three-phase/two-phase conversion unit 66 from the d-axis target current Id* to generate a d-axis current deviation ΔId.

The first PI control unit 62 proportionally integrates the q-axis current deviation ΔIq to generate a q-axis voltage command Vq* for controlling the electric motor 2.

The second PI control unit 63 proportionally integrates the d-axis current deviation ΔId to generate a d-axis voltage command Vd* for controlling the electric motor 2.

The first and second PI control unit 62 and 63 correspond to a "feedback control unit" described in the claims. The feedback control may not be performed by the first and second PI control units 62 and 63 but may be performed by first and second PID control units (not illustrated).

The two-phase/three-phase conversion unit 64 calculates commands Vu*, Vv*, and Vw* which are U, V, and W-phase command signals of the electric motor 2 configured as a three-phase brushless motor, based on the two-phase voltage commands Vq* and Vd* and the motor rotation angle θm detected by the motor rotation angle sensor 68.

The voltage-PWM duty conversion unit 65 converts the commands Vu*, Vv*, and Vw* into duty ratios Du, Dv, and Dw of the U, V, and W phases, and outputs the duty ratios to the motor command signal output unit 50.

The three-phase/two-phase conversion unit 66 calculates the actual currents Iqr and Idr based on the actual supply currents lur and Ivr of the U and V phases detected by the motor current sensors 69 and 70 and the motor rotation angle θm detected by the motor rotation angle sensor 68.

The angle-speed calculation processing unit 67 calculates the number of motor rotations Nm, which is the number of rotations of the electric motor 2, based on the motor rotation angle θm, and outputs the number of motor rotations Nm to the motor command signal generation unit 59.

The motor command signal output unit 50 includes a switching circuit in which switching elements, for example, FETs are bridge-connected, and operates the switching elements based on the duty ratios Du, Dv, and Dw to convert the DC voltage of a power supply 71 into a three-phase AC voltage and supply the three-phase AC voltage to the electric motor 2.

FIG. 4(a) is a graph showing an output (steering assistance) torque with respect to input torque to the steering shaft 7, and FIG. 4(b) is a graph showing a steering command signal correction value C with respect to the input torque to the steering shaft 7. Reference output torque 72 indicated by a solid line in FIG. 4(a) is the desired output torque of the steering device when there is no manufacturing error in the power cylinder 6 or the rotary valve 16. Measured output torque 73 indicated by a broken line in FIG. 4(a) is the output torque obtained when the output of the steering device having a manufacturing error in the power cylinder 6 or the rotary valve 16 is measured. Further, the input torque indicated by the horizontal axis in FIGS. 4(a) and 4(b) has a value increasing toward the right side in these figures, and the output torque and the steering command signal correction value C indicated by the vertical axis have values increasing toward the upper side in these figures.

First, measurement of the output torque (output static characteristics) with respect to the input torque of the steering shaft 7 (steering torque in manual steering and motor torque in automatic steering) will be described. In this measurement, for example, in a measurement room in a factory, a torque measuring device is provided on the steering shaft 7, and a strain gauge is provided on the Pitman arm having a fixed end portion. The torque measuring device detects the steering torque and the motor torque by applying the rotational force to the steering shaft 7 and causing the force in a vehicle widthwise direction to act on the Pitman arm. In addition, the torque measuring device detects the measured output torque 73 that is the turning force based on the strain amount measured by the strain gauge.

As illustrated in FIG. 4(a), the reference output torque 72 is higher than the measured output torque 73, and both of them increase quadratically. As illustrated in FIG. 4(a), first input torque Tia is required to obtain predetermined output torque To based on the reference output torque 72, whereas second input torque Tib, which is larger than the first input torque Tia, is required to obtain the same output torque To based on the measured output torque 73. That is, in order to obtain the output torque To based on the measured output torque 73, it is necessary to input a larger input torque by the difference Tib-Tia between the input torque Tia and the input torque Tib than in the case where the output torque To is obtained based on the reference output torque 72.

When the difference in input torque between the reference output torque 72 and the measured output torque 73 (for example, the difference Tib-Tia) is converted into a correction value for obtaining an output torque equivalent to the reference output torque 72 by the measured output torque 73 and is represented as the steering command signal correction value C, the graph illustrated in FIG. 4(b) is obtained.

When the input torque is relatively small, the difference in input torque between the reference output torque 72 and the measured output torque 73 increases toward the right side of FIG. 4(a). Thus, the steering command signal correction value C increases linearly as illustrated in FIG. 4(b) (portion indicated by the reference numeral R1). On the other hand, when the input torque is relatively large, the difference in input torque between the reference output torque 72 and the measured output torque 73 is substantially constant as illustrated in FIG. 4(a). Thus, the steering command signal correction value C is flat as illustrated in FIG. 4(b) (portion indicated by the reference numeral R2).

The steering command signal correction value C can be estimated from the difference between the reference value and the measured value by grasping the correlation between the difference Tib-Tia as illustrated in FIG. 4(a) and the difference between the reference value and the measured value relating to the molding of the power cylinder 6 and the rotary valve 16. The steering command signal correction value C is used for, for example, a lot of the steering device including the difference between the reference value and the measured value. Information regarding the steering command signal correction value C is input from the ADAS controller 38 to the steering command signal correction unit 48.

### Effects of First Embodiment

In a steering device in the related art, a power cylinder and a rotary valve including various components include a manufacturing error in an assembled state. That is, since there are dimensional errors generated at the time of molding each of the various components, assembly errors at the time of assembling each component in a factory, and the like, the power cylinder and the rotary valve include the manufacturing errors in the assembled state. Due to the manufacturing error, the output torque with respect to the input torque of the steering device may deviate from the reference value of the output torque in the case where there is no manufacturing error.

In addition, among products of various steering devices having different manufacturing errors, even if the same input torque is input to each steering device, the output torque generated by the input torque may vary by the manufacturing errors of the power cylinder and the rotary valve.

On the other hand, in the first embodiment, in one aspect, the steering device includes: the steering mechanism 4 including the steering shaft 7 and the transmission mechanism, in which the steering shaft 7 includes the input shaft 9, the output shaft 11, and the torsion bars 12 and 13 connecting the input shaft 9 and the output shaft 11, and the transmission mechanism transmits the rotation of the steering shaft 7 to the turning wheels; the power cylinder 6 that includes the power cylinder body 39a, the piston 15, the first fluid chamber P1, and the second fluid chamber P2, and applies the turning force for turning the turning wheels to the transmission mechanism, in which the piston 15 is provided in the power cylinder body 39a, and divides an internal space of the power cylinder body 39a into the first fluid chamber P1 and the second fluid chamber P2; the rotary valve 16 that selectively supplies, to the first fluid chamber P1 and the second fluid chamber P2, the hydraulic fluid supplied from the outside in accordance with torsion of the second torsion bar 13; the electric motor 2 that applies the rotational force to the input shaft 9; and the EPS controller 3 that includes the steering command signal generation unit 45, the steering command signal correction unit 48, the motor command signal generation unit 59, and the motor command signal output unit 50, in which the steering command signal generation unit 45 generates the first automatic steering command B (first manual steering command A), the steering command signal correction unit 48 corrects the first automatic steering command B based on the steering command signal correction value C to generate the second steering command D, the steering command signal correction value C is generated in accordance with the output of the power cylinder 6 with respect to the third steering command signal when the third steering command signal is input to the electric motor 2, the motor command signal generation unit 59 generates the motor command signal based on the second steering command D, and the motor command signal output unit 50 outputs the motor command signal to the electric motor 2.

More specifically, the steering command signal correction value C for absorbing a deviation of the output torque due to the manufacturing error of the power cylinder 6 or the rotary valve 16 manufactured in a factory is provided, and the first automatic steering command B is corrected to the second steering command D based on the steering command signal correction value C. Based on the second steering command D, the motor command signal is generated to drive the electric motor 2. Thus, it is possible to absorb the deviation of the output torque corresponding to the manufacturing error of the rotary valve 16 or the like, and to obtain the desired output torque (output characteristic) with respect to the input torque immediately after the operation of the steering device.

Even if there is no first automatic steering command B based on the steering command signal correction value C, in the present embodiment, the feedback control is performed by the first and second PI control unit 62 and 63. Thus, it is possible to obtain the desired output torque after predetermined time elapses.

However, as in the present embodiment, by generating the motor command signal based on the second steering command D corrected by the steering command signal correction value C, it is possible to obtain the desired output characteristic immediately after the operation of the steering device.

In addition, even though the same input torque is input to various steering devices having different manufacturing errors, it is possible to suppress a variation in output characteristics among products of the steering device by performing correction with the steering command signal correction value corresponding to each manufacturing error.

Further, since it is possible to correct the output torque by the steering command signal correction value corresponding to each manufacturing error even when there is a variation in output characteristics among products of the steering device, it is not necessary to narrow the dimensional tolerances of the power cylinder 6 and the rotary valve 16. Therefore, it is possible to easily manufacture the power cylinder 6 and the rotary valve 16, and suppress an increase in manufacturing cost.

In the first embodiment, the steering command signal correction value C is generated based on the difference between the reference output torque 72 and the output of the power cylinder 6 when the third steering command signal is input to the electric motor 2.

Therefore, by setting the reference output torque 72 to the value of the desired output characteristic, it is possible to obtain the desired output characteristic of the steering device. Further, by correcting the output characteristics of each steering device in accordance with the reference output torque 72, it is possible to efficiently suppress a variation in output characteristics among products of the steering device.

### Second Embodiment

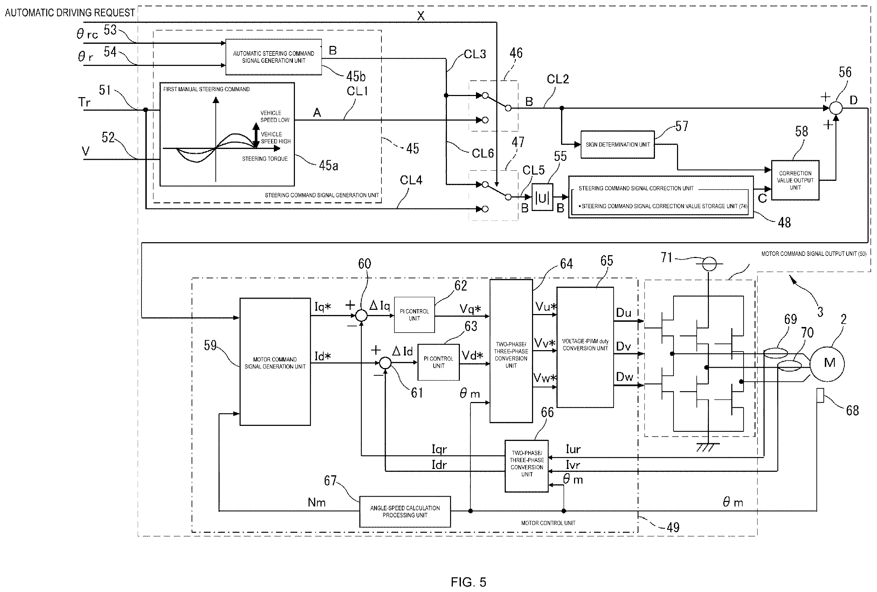

FIG. 5 is a control block diagram of an EPS controller according to a second embodiment.

In the second embodiment, the steering command signal correction unit 48 includes a steering command signal correction value storage unit 74 that stores the steering command signal correction value C. The steering command signal correction value storage unit 74 is a non-volatile memory, for example, an EEPROM. The steering command signal correction value storage unit 74 stores a map of the steering command signal correction value C acquired based on the measurement result of the output torque with respect to the input torque of each steering device at the shipping stage. This map is constructed by obtaining the results as shown in the graph of FIG. 4(b) described above for each steering device.

### Effects of Second Embodiment

In the second embodiment, the EPS controller 3 includes the steering command signal correction value storage unit 74 that stores the steering command signal correction value C. The steering command signal correction unit 48 corrects the first automatic steering command B (first manual steering command A) based on the steering command signal correction value C stored in the steering command signal correction value storage unit 74 to generate the second steering command D.

Therefore, by precisely measuring the output characteristic of each steering device at the shipping stage by the output characteristic measuring method described in FIG. 4(a), and correcting the output torque with the steering command signal correction value corresponding to the measurement result, it is possible to efficiently suppress a variation in the output characteristic between products of the steering device.

### Third Embodiment

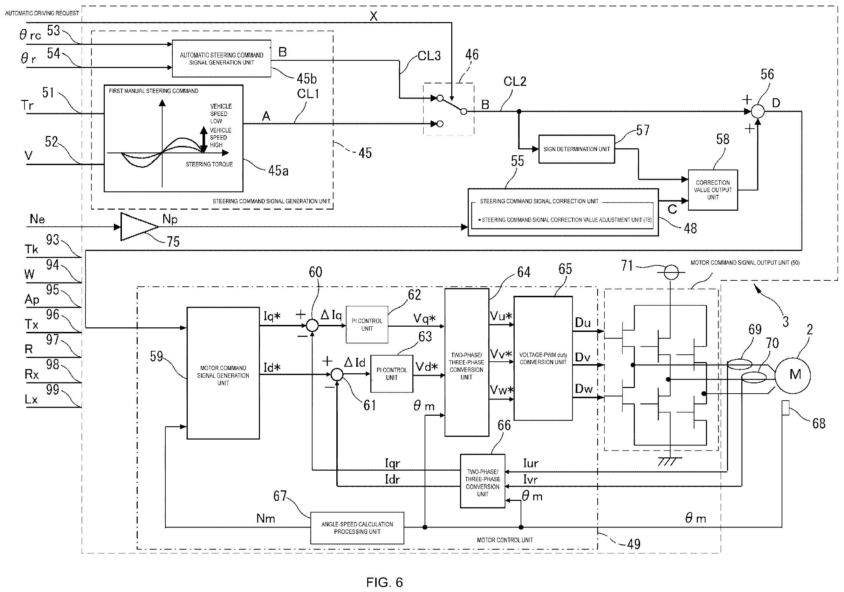

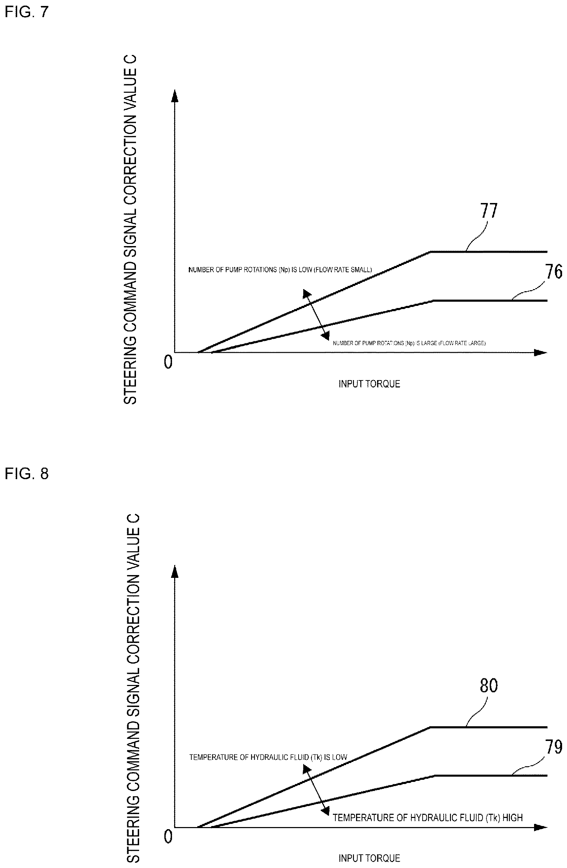

FIG. 6 is a control block diagram of an EPS controller 3 according to a third embodiment. FIG. 7 is a graph according to the third embodiment showing a steering command signal correction value C with respect to input torque to a steering shaft 7 in the third embodiment. In FIG. 7, a line 76 indicates the steering command signal correction value C when the number of pump rotations Np is relatively high, and a line 77 indicates the steering command signal correction value C when the number of pump rotations Np is relatively low.

In the third embodiment, the EPS controller 3 includes a pump rotation number calculation unit 75 that calculates the number of pump rotations Np that increases or decreases in proportion to the number of engine rotations Ne. The number of pump rotations Np may be calculated based on a value corresponding to the number of pump rotations Np, for example, the rotation speed of a drive shaft of the pump device 17 or the rotation speed of the electric motor 2 that drives the pump device 17. The number of pump rotations Np corresponds to the "rotation speed of the pump device" described in the claims.

The steering command signal correction unit 48 includes a steering command signal correction value adjustment unit 78 that adjusts the steering command signal correction value C based on the number of pump rotations Np output from the pump rotation number calculation unit 75.

As illustrated in FIG. 7, the steering command signal correction value C is set to decrease as the number of pump rotations Np increases. Since the discharge amount of the pump device 17 increases or decreases in accordance with the number of pump rotations Np, the steering command signal correction value C decreases as the discharge amount (flow rate) of the hydraulic fluid from the pump device 17 increases.

The interface of the EPS controller 3 is provided with a hydraulic fluid temperature signal reception unit 93, a load weight signal reception unit 94, an air pressure signal reception unit 95, an environmental temperature signal reception unit 96, a motor inter-terminal resistance value signal reception unit 97, a right-turning steering signal correction value reception unit 98, and a left-turning steering command signal correction value reception unit 99 as external inputs.

The hydraulic fluid temperature signal reception unit 93 receives a signal related to the temperature Tk of the hydraulic fluid supplied to the first fluid chamber P1 or the second fluid chamber P2.

The load weight signal reception unit 94 receives a signal related to a load weight W which is a weight of a load loaded on a loading platform or a cargo compartment of the vehicle.

The air pressure signal reception unit 95 receives a signal related to the air pressure Ap of the turning wheel.

The environmental temperature signal reception unit 96 receives a signal related to the environmental temperature Tx.

The motor inter-terminal resistance value signal reception unit 97 receives a signal related to the inter-terminal resistance value R of the output terminal of the electric motor 2.

The right-turning steering signal correction value reception unit 98 receives a right-turning steering signal correction value Rx which is a correction value when the turning wheel is turned to the right.

The left-turning steering command signal correction value reception unit 99 receives a left-turning steering command signal correction value Lx which is a correction value when the turning wheel is turned to the left.

### Effects of Third Embodiment

In the third embodiment, the hydraulic fluid supplied to the rotary valve 16 is supplied from the pump device 17. The steering command signal correction unit 48 includes the steering command signal correction value adjustment unit 78, and the steering command signal correction value adjustment unit 78 adjusts the steering command signal correction value C based on the signal related to the number of pump rotations Np. Specifically, in the third embodiment, the steering command signal correction value adjustment unit 78 decreases the steering command signal correction value C as the value of the signal related to the number of pump rotations Np increases.

More specifically, since the discharge amount of the pump device 17 increases or decreases in accordance with the number of pump rotations Np, it is possible to obtain the output of the power cylinder 6 by calculating the amount of the hydraulic fluid flowing into the first and second fluid chambers P1 and P2 of the power cylinder 6. The output of the steering device is the sum of the output of the power cylinder 6 and the output (motor torque) of the electric motor 2. As the number of pump rotations Np increases and the discharge amount of the pump device 17 increases, the ratio of the output of the power cylinder 6 to the entire output of the steering device increases, and the ratio of the output of the electric motor 2 to the entire output of the steering device decreases. Therefore, when the number of pump rotations Np is high and the ratio of the output of the power cylinder 6 is high, it is possible to maintain the entire output of the steering device at the desired value by decreasing the steering command signal correction value C by the amount of increase in the output of the power cylinder 6 to suppress the output of the electric motor 2.

### Fourth Embodiment

FIG. 8 is a graph according to a fourth embodiment showing a steering command signal correction value C with respect to input torque to a steering shaft 7 in the fourth embodiment. In FIG. 8, a line 79 indicates the steering command signal correction value C when the temperature Tk of the hydraulic fluid is relatively high, and a line 80 indicates the steering command signal correction value C when the temperature Tk of the hydraulic fluid is relatively low. In the fourth embodiment, control by the same EPS controller 3 as that in the embodiment illustrated in FIG. 6 is performed, and the same components are denoted by the same reference numerals.

Although specific illustration is omitted, in the fourth embodiment, unlike the first to third embodiments, the temperature Tk of the hydraulic fluid supplied to the first fluid chamber P1 or the second fluid chamber P2 is input from the hydraulic fluid temperature signal reception unit 93 to the steering command signal correction unit 48. The temperature Tk of the hydraulic fluid is detected by a hydraulic fluid temperature sensor (not illustrated).

The steering command signal correction value adjustment unit 78 provided in the steering command signal correction unit 48 adjusts the steering command signal correction value C based on the temperature Tk of the hydraulic fluid. As illustrated in FIG. 8, the steering command signal correction value C is set to increase as the temperature Tk of the hydraulic fluid decreases.

### Effects of Fourth Embodiment

In the fourth embodiment, the steering command signal correction value adjustment unit 78 adjusts the steering command signal correction value C based on the signal related to the temperature Tk of the hydraulic fluid supplied to the first fluid chamber P1 or the second fluid chamber P2. Specifically, in the fourth embodiment, the steering command signal correction value adjustment unit 78 increases the steering command signal correction value C as the value of the signal related to the temperature Tk of the hydraulic fluid supplied to the first fluid chamber P1 or the second fluid chamber P2 decreases.

More specifically, when the temperature Tk of the hydraulic fluid is relatively low, the viscous resistance of the hydraulic fluid is large, and thus the output of the power cylinder 6 becomes low. As described above, the entire output of the steering device is the sum of the output of the power cylinder 6 and the output of the electric motor 2. Therefore, even when the temperature Tk of the hydraulic fluid is low and the output of the power cylinder 6 decreases, it is possible to maintain the entire output of the steering device by increasing the steering command signal correction value C to increase the output of the electric motor 2.

### Fifth Embodiment

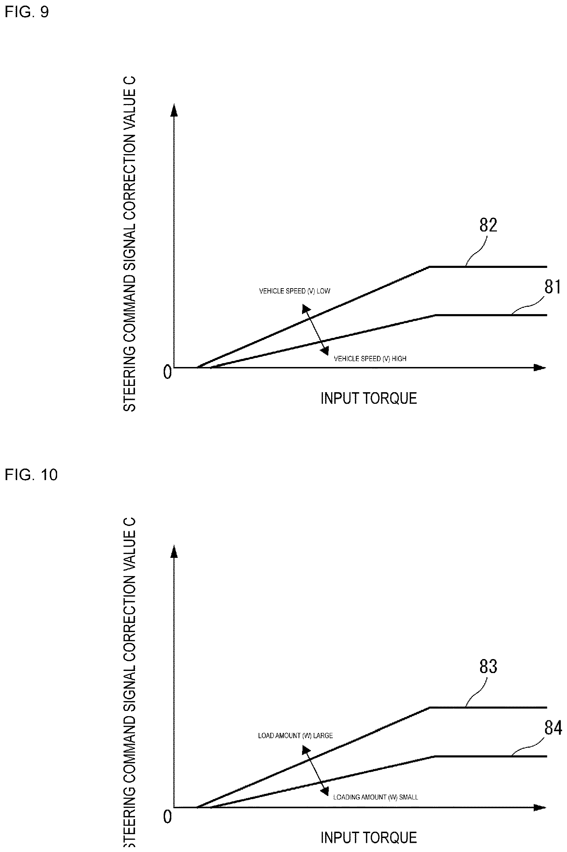

FIG. 9 is a graph according to a fifth embodiment showing a steering command signal correction value C with respect to input torque to a steering shaft 7 in the fifth embodiment. In FIG. 9, a line 81 indicates the steering command signal correction value C when the vehicle speed V is relatively high, and a line 82 indicates the steering command signal correction value C when the vehicle speed V is relatively low. In the fifth embodiment, control by the same EPS controller 3 as that in the embodiment illustrated in FIG. 6 is performed, and the same components are denoted by the same reference numerals.

Although not specifically illustrated, in the fifth embodiment, unlike the first to fourth embodiments, the vehicle speed V detected by the vehicle speed sensor is input from the vehicle speed signal reception unit 52 to the steering command signal correction unit 48. The steering command signal correction value adjustment unit 78 provided in the steering command signal correction unit 48 adjusts the steering command signal correction value C based on the vehicle speed V. As illustrated in FIG. 9, the steering command signal correction value C is set to increase as the vehicle speed V decreases.

### Effects of Fifth Embodiment

In the fifth embodiment, the EPS controller 3 includes the vehicle speed signal reception unit 52 that receives the signal of the vehicle speed (vehicle speed V), and the steering command signal correction value adjustment unit 78 increases the steering command signal correction value C as the vehicle speed V decreases.

More specifically, when the vehicle speed V is low, the frictional force acting on the turning wheels from the road surface is large. Thus, in order to turn the turning wheel against the frictional force, it is necessary to increase the output of the steering device. Therefore, by increasing the steering command signal correction value C to increase the output of the electric motor 2, the entire output of the steering device is increased, and it is possible to obtain the output of the steering device capable of withstanding the increased frictional force. In other words, it is possible to maintain a desired steering feel (steerability).

### Sixth Embodiment

FIG. 10 is a graph according to a sixth embodiment showing a steering command signal correction value C with respect to input torque to a steering shaft 7 in the sixth embodiment. In FIG. 10, a line 83 indicates the steering command signal correction value C when the load weight W is relatively large, and a line 84 indicates the steering command signal correction value C when the load weight W is relatively small. In the sixth embodiment, control by the same EPS controller 3 as that in the embodiment illustrated in FIG. 6 is performed, and the same components are denoted by the same reference numerals.

Although not specifically illustrated, in the sixth embodiment, unlike the first to fifth embodiments, the load weight W, which is the weight of a cargo loaded on the loading platform or the cargo compartment of the vehicle, is input from the load weight signal reception unit 94 to the steering command signal correction unit 48. The load weight W is measured by a load weight measuring device provided in the loading platform or the cargo compartment. The steering command signal correction value adjustment unit 78 provided in the steering command signal correction unit 48 adjusts the steering command signal correction value C based on the load weight W. As illustrated in FIG. 10, the steering command signal correction value C is set to increase as the load weight W increases.

### Effects of Sixth Embodiment

In the sixth embodiment, the EPS controller 3 includes the load weight signal reception unit 94 that receives the signal (load weight W) related to the load weight. The signal related to the load weight is a signal related to the weight of a cargo loaded on a loading platform or a cargo compartment of the vehicle, and the steering command signal correction value adjustment unit 78 increases the steering command signal correction value C as the load weight W increases.

More specifically, when the load weight W is large, a large load corresponding to the load weight W acts on the turning wheels, so that the steering device requires a higher output to turn the turning wheel against the load corresponding to the load weight W. Therefore, by increasing the steering command signal correction value C by the load of the load weight W to increase the output of the electric motor 2, the entire output of the steering device is increased, and it is possible to obtain the output of the steering device capable of withstanding the load weight W. In other words, it is possible to maintain a desired steering feel (steerability).

### Seventh Embodiment

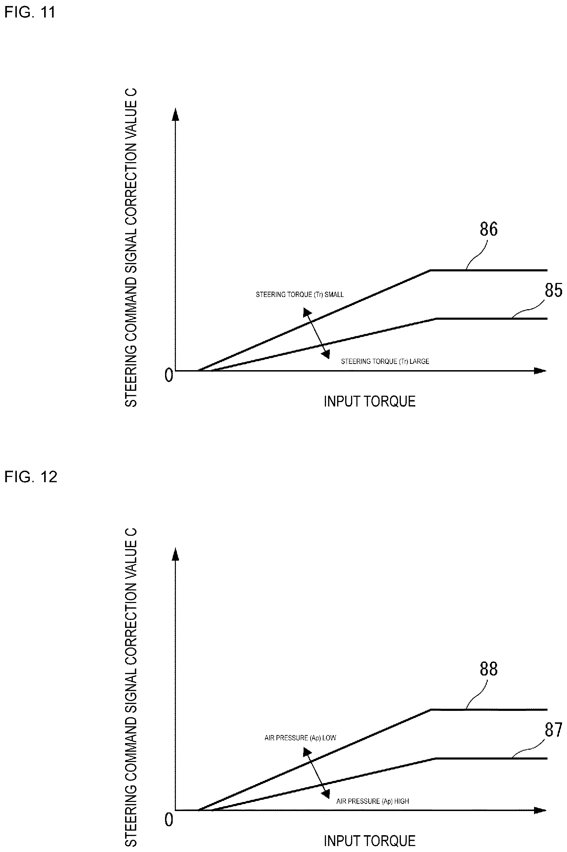

FIG. 11 is a graph according to a seventh embodiment showing a steering command signal correction value C with respect to input torque to a steering shaft 7 in the seventh embodiment. In FIG. 11, a line 85 indicates the steering command signal correction value C when the steering torque Tr is relatively large, and a line 86 indicates the steering command signal correction value C when the steering torque Tr is relatively small. In the seventh embodiment, control by the same EPS controller 3 as that in the embodiment illustrated in FIG. 6 is performed, and the same components are denoted by the same reference numerals.

In the seventh embodiment, unlike the first to sixth embodiments, the steering force, that is, the steering torque Tr detected by the torque sensor 32 is input from the steering torque signal reception unit 51 to the steering command signal correction unit 48. The steering command signal correction value adjustment unit 78 provided in the steering command signal correction unit 48 adjusts the steering command signal correction value C based on the steering torque Tr. As illustrated in FIG. 11, the steering command signal correction value C is set to decrease as the steering torque Tr increases.

### Effects of Seventh Embodiment

In the seventh embodiment, the steering device includes the torque sensor 32, the torque sensor 32 is provided on the steering shaft 7 and detects the steering torque Tr which is a steering load of the driver. The EPS controller 3 includes the steering torque signal reception unit 51, and the steering torque signal reception unit 51 receives the steering torque Tr which is a signal related to the steering torque. The steering command signal correction value adjustment unit 78 decreases the steering command signal correction value C as the steering torque Tr increases.

Since the driver is actively steering the steering wheel when the steering torque Tr is large as described above, if the steering command signal correction value C is increased, the steering operation of the driver is disturbed. Therefore, when the steering torque Tr is large, the steering command signal correction value C is decreased in order to give priority to the steering operation of the driver, so that it is possible to improve the steering feeling of the driver.

### Eighth Embodiment

FIG. 12 is a graph according to an eighth embodiment showing a steering command signal correction value C with respect to input torque to a steering shaft 7 in the eighth embodiment. In FIG. 12, a line 87 indicates the steering command signal correction value C when the air pressure Ap of the turning wheels is relatively high, and a line 88 indicates the steering command signal correction value C when the air pressure Ap of the turning wheels is relatively low. In the eighth embodiment, control by the same EPS controller 3 as that in the embodiment illustrated in FIG. 6 is performed, and the same components are denoted by the same reference numerals.

Although not specifically illustrated, in the eighth embodiment, unlike the first to seventh embodiments, the air pressure Ap of the turning wheel is input from the steering torque signal reception unit 51 to the steering command signal correction unit 48. The steering command signal correction value adjustment unit 78 provided in the steering command signal correction unit 48 adjusts the steering command signal correction value C based on the air pressure Ap of the turning wheel. As illustrated in FIG. 12, the steering command signal correction value C is set to increase as the air pressure Ap of the turning wheel decreases.

### Effects of Eighth Embodiment

In the eighth embodiment, the EPS controller 3 includes the air pressure signal reception unit 95, and the air pressure signal reception unit 95 receives an air pressure signal that is a signal related to the air pressure Ap of the tire of the turning wheel. The steering command signal correction value adjustment unit 78 increases the steering command signal correction value C as the air pressure Ap of the tire of the turning wheel decreases.

More specifically, when the air pressure Ap of the turning wheel is low, the contact area between the outer peripheral surface of the turning wheel and the road surface is large, and the frictional force acting on the turning wheel from the road surface is also large. Therefore, the turning wheel is difficult to be turned. Therefore, in order to turn the turning wheels against the frictional force, a higher output is required in the steering device. Therefore, by increasing the steering command signal correction value C to increase the output of the electric motor 2, the output of the steering device is increased, and it is possible to obtain the output of the steering device capable of withstanding the increased frictional force. In other words, it is possible to maintain a desired steering feel (steerability).

### Ninth Embodiment

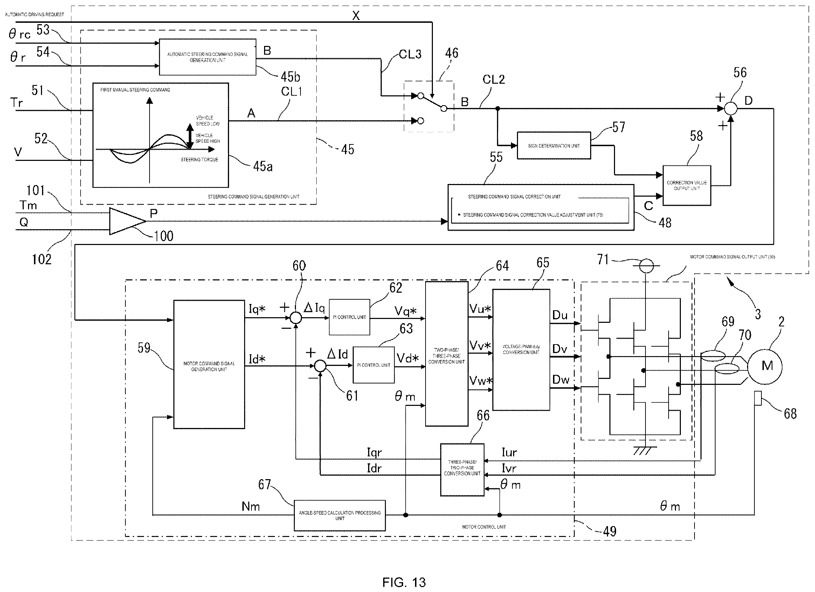

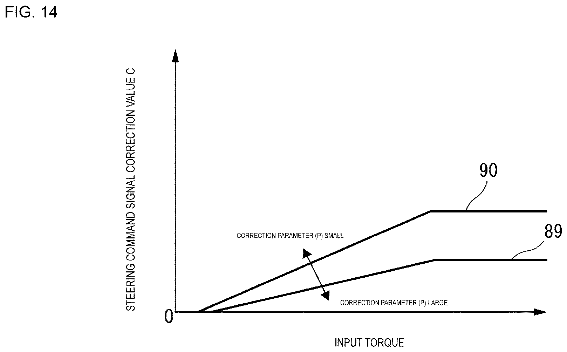

FIG. 13 is a control block diagram of an EPS controller 3 according to a ninth embodiment. FIG. 14 is a graph according to the ninth embodiment showing a steering command signal correction value C with respect to input torque to a steering shaft 7 in the ninth embodiment. In FIG. 14, a line 89 indicates the steering command signal correction value C when a correction parameter P described later is relatively large, and a line 90 indicates the steering command signal correction value C when the correction parameter P is relatively small.

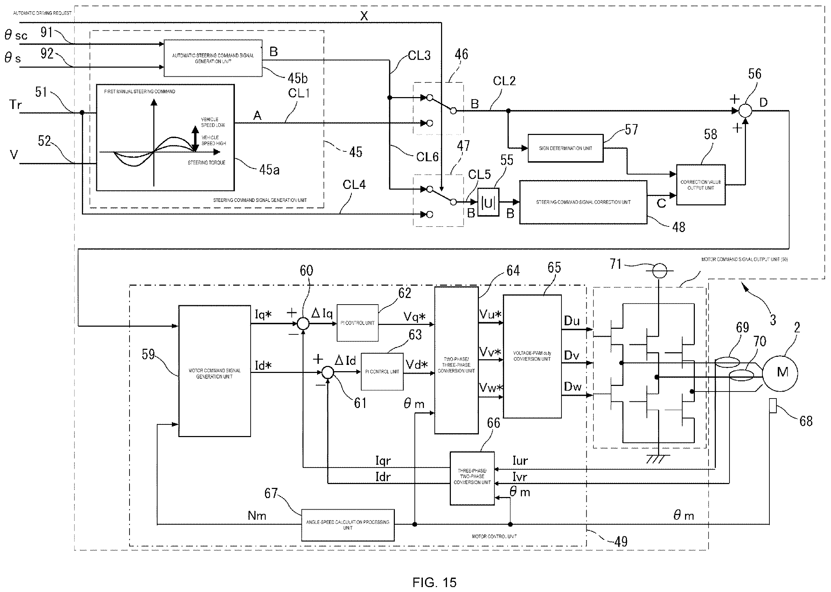

In the ninth embodiment, unlike the first to eighth embodiments, a motor torque signal reception unit 101 and a turning acceleration signal reception unit 102 are provided in the interface of the EPS controller 3. The motor torque signal reception unit 101 receives a signal related to the motor torque Tm of the electric motor 2. The turning acceleration signal reception unit 102 receives a signal related to the turning acceleration Q of the turning wheel. The turning acceleration Q is calculated based on the turning angle θs (see FIG. 15), the motor rotation angle θm, and the like. The motor torque Tm and the turning acceleration Q are input to a correction parameter calculation unit 100 provided in the EPS controller 3. The correction parameter calculation unit 100 generates the correction parameter P by dividing the turning acceleration Q by the motor torque Tm, and outputs the correction parameter P to the steering command signal correction unit 48. The correction parameter P corresponds to the gain of the output torque of the power cylinder 6. As illustrated in FIG. 14, the steering command signal correction unit 48 is set to decrease as the correction parameter P increases.

As the signal of the motor torque Tm, an output signal from the torque sensor 32 may be used, or a current flowing through the electric motor 2 or a command signal to the electric motor 2 may be used.

### Effects of Ninth Embodiment

In the ninth embodiment, the EPS controller 3 includes the turning acceleration signal reception unit 102 and the motor torque signal reception unit 101. The turning acceleration signal reception unit 102 receives the signal related to the turning acceleration Q of the turning wheel, and the motor torque signal reception unit 101 receives the signal related to the motor torque Tm of the electric motor 2. The steering command signal correction unit 48 includes the steering command signal correction value adjustment unit 78, and the steering command signal correction value adjustment unit 78 adjusts the steering command signal correction value C based on the signal related to the turning acceleration Q of the turning wheel and the motor torque Tm. Specifically, the steering command signal correction value C is set to decrease as the correction parameter P obtained by dividing the turning acceleration Q by the motor torque Tm of the electric motor 2 increases.

When the friction decreases due to the deterioration of the power cylinder 6 over time, for example, deterioration of the sealing performance of the piston 15, the turning acceleration Q increases. Then, the correction parameter P obtained by dividing the turning acceleration Q by the motor torque Tm increases. Since the correction parameter P corresponds to the gain of the output torque of the power cylinder 6, when the correction parameter P is large, the gain of the output torque of the power cylinder 6 is also large. In such a case, it is possible to suppress the entire output of the steering device by reducing the steering command signal correction value C by the amount of reduction in friction due to deterioration over time, that is, by the amount of increase in the turning acceleration Q to reduce the output torque of the electric motor 2. As a result, it is possible to maintain the output of the steering device at the desired value.

### Tenth Embodiment

FIG. 15 is a control block diagram of an EPS controller 3 according to a tenth embodiment.

In the tenth embodiment, the steering angle command signal reception unit 53 and the steering angle signal reception unit 54 provided in the interface of the steering command signal generation unit 45 in the first to ninth embodiments are replaced with a turning angle command signal reception unit 91 and a turning angle signal reception unit 92.

The turning angle command signal reception unit 91 is an external input that receives a turning angle command signal (referred to as a "turning angle command" below) θsc that is a signal related to a target turning angle of the turning wheel.

The turning angle signal reception unit 92 is an external input that receives a turning angle signal (referred to as a "turning angle" below) θs that is a signal related to an actual turning angle of the turning wheel. The turning angle θs is detected by a turning angle sensor (not illustrated) that is provided on a turning shaft connected to the turning wheel and detects a stroke position of the turning shaft.

The turning angle θs may be calculated based on the torsion torque of the first and second torsion bars 12 and 13, and the motor torque Tm.

Further, the turning angle θs may be estimated based on the motor rotation angle θm of the electric motor 2.

As illustrated in FIG. 15, the turning angle command θsc and the turning angle θs are converted into the first automatic steering command B through the automatic steering command signal generation unit 45b. The first automatic steering command B is converted into the second steering command D by the adder 56 adding the steering command signal correction value C to the first automatic steering command B. The second steering command D is input to the motor command signal generation unit 59 together with the number of motor rotations Nm. The motor command signal generation unit 59 generates the q-axis target current Iq* and the d-axis target current Id* based on the number of motor rotations Nm, and the second steering command D acquired based on the turning angle command θsc and the turning angle θs. The current deviations ΔIq and ΔId are generated by subtracting the actual currents lqr and Iqr from the target currents Iq* and Id*, respectively. The current deviations ΔIq and ΔId are input to the first and second PI control unit 62 and 63 that are the feedback control units, respectively.

### Effects of Tenth Embodiment

In the tenth embodiment, the EPS controller 3 includes the turning angle command signal reception unit 91 and the turning angle signal reception unit 92. The turning angle command signal reception unit 91 receives the turning angle command θsc, which is a signal related to the target turning angle of the turning wheel, and transmits the turning angle command θsc to the steering command signal generation unit 45. The turning angle signal reception unit 92 receives the turning angle θs, which is a signal related to the actual turning angle θs of the turning wheel. The motor command signal generation unit 59 includes the first and second PI control units 62 and 63, and the first and second PI control units 62 and 63 generate the motor command signal by feedback control based on the second steering command D and the turning angle θs.

During driving by automatic steering, for example, during lane keeping, the steering torque Tr may be input from the ADAS controller 38 to the motor command signal generation unit 59, and the electric motor 2 may be driven by a command signal calculated based on the steering torque Tr without using the feedback control. In this case, the steering torque Tr is input on the assumption that a predetermined turning angle or assist torque is output, and so-called open-loop control is performed. Therefore, there is a concern that it is not possible to control the electric motor 2 with high accuracy.

However, as in the present embodiment, the target currents Iq* and Id* are generated based on the second steering command D calculated by using the turning angle θs, and the current deviations ΔIq and ΔId obtained by subtracting the target currents Iq* and Id* are input to the first and second PI control unit 62 and 63 to perform feedback control, whereby it is possible to control the electric motor 2 with accuracy higher than in the case of the above-described open-loop control.

Further, by using the turning angle θs instead of the steering angle θr for the first automatic steering command B for generating the second steering command D, it is possible to efficiently control the electric motor 2 in accordance with the gain of the power cylinder 6.

### Other Embodiments

In another embodiment, for example, in the steering device in the third embodiment, the EPS controller 3 may include the environmental temperature signal reception unit 96, the environmental temperature signal reception unit 96 may receive the output signal of the temperature sensor provided in the vehicle, and the steering command signal correction value adjustment unit 78 may adjust the steering command signal correction value C based on the output signal of the temperature sensor.

Therefore, by acquiring the environmental temperature Tx from the environmental temperature signal reception unit 96 through the CAN communication, and estimating the temperature Tk of the hydraulic fluid supplied to the first fluid chamber P1 or the second fluid chamber P2 based on the environmental temperature Tx, it is possible to obtain the temperature Tk of the hydraulic fluid without providing a hydraulic fluid temperature sensor in the steering device. Therefore, it is possible to reduce the manufacturing cost of the steering device.

In another embodiment, for example, in the steering device in the third embodiment, the EPS controller 3 may include the motor inter-terminal resistance value signal reception unit 97, the motor inter-terminal resistance value signal reception unit 97 may receive a signal related to the inter-terminal resistance value R of the output terminal of the electric motor 2, and the steering command signal correction value adjustment unit 78 may adjust the steering command signal correction value C based on the signal related to the motor inter-terminal resistance value R.

Since the inter-terminal resistance value R changes in accordance with the environmental temperature Tx, it is also possible to obtain the temperature Tk of the hydraulic fluid without providing a hydraulic fluid temperature sensor in the steering device, by estimating the temperature Tk of the hydraulic fluid based on the inter-terminal resistance value R. Therefore, it is possible to reduce the manufacturing cost of the steering device.

Furthermore, in another embodiment, for example, in the steering device in the third embodiment, the steering command signal correction value C may include a right-turning steering command signal correction value Rx and a left-turning steering command signal correction value Lx. The right-turning steering command signal correction value Rx and the left-turning steering command signal correction value Lx may have values different from each other. The steering command signal correction unit 48 may generate the second steering command D by correcting the first automatic steering command B (first manual steering command A) based on the right-turning steering command signal correction value Rx when the turning wheel turns to the right, and generate the second steering command D by correcting the first automatic steering command B (first manual steering command A) based on the left-turning steering command signal correction value Lx when the turning wheel turns to the left.

Generally, in the integral type steering device, due to a difference in volume between the first fluid chamber P1 and the second fluid chamber P2 or a difference in pressure receiving area between the first fluid chamber P1 and the second fluid chamber P2, there may be a difference in output characteristic of the power cylinder 6 between the time of supplying the hydraulic fluid to the first fluid chamber P1 (for example, rightward turning) and the time of supplying the hydraulic fluid to the second fluid chamber P2 (for example, leftward turning).

Thus, in the present embodiment, in order to compensate for the difference in output characteristics of the power cylinder 6 between the time of leftward turning and the time of rightward turning, the steering command signal correction unit 48 generates the second steering command D by using the right-turning steering command signal correction value Rx at the time of rightward turning, and generates the second steering command D by using the left-turning steering command signal correction value Lx at the time of leftward turning.

In each of the above-described embodiments, an example in which a variation in the static characteristics of the power cylinder 6 is suppressed has been disclosed. A configuration in which a variation in dynamic characteristics of the power cylinder 6 is suppressed can also be applied to the present invention.

As the steering device based on the above-described embodiments, for example, the following aspects are conceivable.

In one aspect, a steering device includes: a steering mechanism including a steering shaft and a transmission mechanism, in which the steering shaft includes an input shaft, an output shaft, and a torsion bar that connects the input shaft and the output shaft, and the transmission mechanism transmits rotation of the steering shaft to a turning wheel; a power cylinder that includes a power cylinder body, a piston, a first fluid chamber, and a second fluid chamber and applies a turning force for turning a turning wheel to the transmission mechanism, in which the piston is provided in the power cylinder body and divides an internal space of the power cylinder body into the first fluid chamber and the second fluid chamber; a rotary valve that selectively supplies a hydraulic fluid from an outside to the first fluid chamber and the second fluid chamber in accordance with torsion of the torsion bar; an electric motor that applies a rotational force to the input shaft; and a controller including a steering command signal generation unit, a steering command signal correction unit, a motor command signal generation unit, and a motor command signal output unit, in which the steering command signal generation unit generates a first steering command signal, the steering command signal correction unit corrects the first steering command signal based on a steering command signal correction value to generate a second steering command signal, the steering command signal correction value is generated in accordance with an output of the power cylinder with respect to a third steering command signal when the third steering command signal is input to the electric motor, the motor command signal generation unit generates a motor command signal based on the second steering command signal, and the motor command signal output unit outputs the motor command signal to the electric motor.

In a preferred aspect of the steering device, the controller includes a steering command signal correction value storage unit, the steering command signal correction value storage unit stores the steering command signal correction value, and the steering command signal correction unit corrects the first steering command signal based on the steering command signal correction value stored in the steering command signal correction value storage unit to generate the second steering command signal.

In another preferred aspect, in any one of the aspects of the steering device, the steering command signal correction value is generated based on a difference between a reference output and the output of the power cylinder when the third steering command signal is input to the electric motor.

In another preferred aspect, in any one of the aspects of the steering device, the hydraulic fluid supplied to the rotary valve is supplied from a pump device, the steering command signal correction unit includes a steering command signal correction value adjustment unit, and the steering command signal correction value adjustment unit adjusts the steering command signal correction value based on a signal related to a rotation speed of the pump device.

In another preferred aspect, in any one of the aspects of the steering device, the steering command signal correction value adjustment unit decreases the steering command signal correction value as a value of the signal related to the rotation speed of the pump device increases.

In another preferred aspect, in any one of the aspects of the steering device, the steering command signal correction value adjustment unit adjusts the steering command signal correction value based on a signal related to a temperature of the hydraulic fluid supplied to the first fluid chamber or the second fluid chamber.

In another preferred aspect, in any one of the aspects of the steering device, the steering command signal correction value adjustment unit increases the steering command signal correction value as a value of the signal related to the temperature of the hydraulic fluid supplied to the first fluid chamber or the second fluid chamber decreases.

In another preferred aspect, in any one of the aspects of the steering device, the controller includes an environmental temperature signal reception unit, the environmental temperature signal reception unit receives an output signal of a temperature sensor provided in a vehicle, and the steering command signal correction value adjustment unit adjusts the steering command signal correction value based on the output signal of the temperature sensor.

In another preferred aspect, in any one of the aspects of the steering device, the controller includes a motor inter-terminal resistance value signal reception unit, the motor inter-terminal resistance value signal reception unit receives a signal related to an inter-terminal resistance value of an output terminal of the electric motor, and the steering command signal correction value adjustment unit adjusts the steering command signal correction value based on the signal related to the motor inter-terminal resistance value.

In another preferred aspect, in any one of the aspects of the steering device, the controller includes a vehicle speed signal reception unit that receives a signal of a vehicle speed, and the steering command signal correction value adjustment unit increases the steering command signal correction value as the vehicle speed decreases.

In another preferred aspect, in any one of the aspects of the steering device, the controller includes a load weight signal reception unit that receives a signal related to a load weight, the signal related to the load weight is a signal related to a weight of a cargo loaded on a loading platform or a cargo compartment of the vehicle, and the steering command signal correction value adjustment unit increases the steering command signal correction value as the load weight increases.

In another preferred aspect, in any one of the aspects of the steering device, the steering device includes a torque sensor, the torque sensor is provided on the steering shaft and detects a steering torque which is a steering load of a driver, the controller further includes the steering torque signal reception unit, the steering torque signal reception unit receives a steering torque signal that is a signal related to the steering torque, and the steering command signal correction value adjustment unit decreases the steering command signal correction value as the steering torque increases.

In another preferred aspect, in any one of the aspects of the steering device, the controller includes an air pressure signal reception unit, the air pressure signal reception unit receives an air pressure signal that is a signal related to air pressure of a tire of the turning wheel, and the steering command signal correction value adjustment unit increases the steering command signal correction value as the air pressure of the tire of the turning wheel decreases.

In another preferred aspect, in any one of the aspects of the steering device, the controller includes a turning acceleration signal reception unit and a motor torque signal reception unit, the turning acceleration signal reception unit receives a signal related to a turning acceleration of the turning wheel, the motor torque signal reception unit receives a signal related to an output torque of the electric motor, the steering command signal correction unit includes a steering command signal correction value adjustment unit, and the steering command signal correction value adjustment unit adjusts the steering command signal correction value based on the signal related to the turning acceleration of the turning wheel and the motor torque signal.

In another preferred aspect, in any one of the aspects of the steering device, the controller includes a turning angle command signal reception unit and a turning angle signal reception unit, the turning angle command signal reception unit receives a turning angle command signal that is a signal related to a target turning angle of the turning wheel, and transmits the turning angle command signal to the steering command signal generation unit, the turning angle signal reception unit receives a turning angle signal that is a signal related to an actual turning angle of the turning wheel, the motor command signal generation unit includes a feedback control unit, and the feedback control unit generates the motor command signal by feedback control based on the second steering command signal and the turning angle signal.

In another preferred aspect, in any one of the aspects of the steering device, steering command signal correction value includes a right-turning steering command signal correction value and a left-turning steering command signal correction value, the right-turning steering command signal correction value and the left-turning steering command signal correction value have values different from each other, and the steering command signal correction unit generates the second steering command signal by correcting the first steering command signal based on the right-turning steering command signal correction value when the turning wheel is turned to the right, and generates the second steering command signal by correcting the first steering command signal based on the left-turning steering command signal correction value when the turning wheel is turned to the left.

## Claims

1. A steering device comprising:
a steering mechanism including a steering shaft and a transmission mechanism,
the steering shaft including an input shaft, an output shaft, and a torsion bar that connects the input shaft and the output shaft, and
the transmission mechanism transmitting rotation of the steering shaft to a turning wheel;
a power cylinder that includes a power cylinder body, a piston, a first fluid chamber, and a second fluid chamber and applies a turning force for turning a turning wheel to the transmission mechanism,
the piston being provided in the power cylinder body and dividing an internal space of the power cylinder body into the first fluid chamber and the second fluid chamber;
a rotary valve that selectively supplies a hydraulic fluid from an outside to the first fluid chamber and the second fluid chamber in accordance with torsion of the torsion bar;
an electric motor that applies a rotational force to the input shaft; and
a controller including a steering command signal generation unit, a steering command signal correction unit, a motor command signal generation unit, and a motor command signal output unit,
the steering command signal generation unit generating a first steering command signal,
the steering command signal correction unit correcting the first steering command signal based on a steering command signal correction value to generate a second steering command signal,
the steering command signal correction value being generated in accordance with an output of the power cylinder with respect to a third steering command signal when the third steering command signal is input to the electric motor,
the motor command signal generation unit generating a motor command signal based on the second steering command signal, and
the motor command signal output unit outputting the motor command signal to the electric motor.

2. The steering device according to claim 1, wherein
the controller further includes a steering command signal correction value storage unit,
the steering command signal correction value storage unit stores the steering command signal correction value, and
the steering command signal correction unit corrects the first steering command signal based on the steering command signal correction value stored in the steering command signal correction value storage unit to generate the second steering command signal.

3. The steering device according to claim 1, wherein
the steering command signal correction value is generated based on a difference between a reference output and the output of the power cylinder when the third steering command signal is input to the electric motor.

4. The steering device according to claim 1, wherein
the hydraulic fluid supplied to the rotary valve is supplied from a pump device,
the steering command signal correction unit includes a steering command signal correction value adjustment unit, and
the steering command signal correction value adjustment unit adjusts the steering command signal correction value based on a signal related to a rotation speed of the pump device.

5. The steering device according to claim 4, wherein
the steering command signal correction value adjustment unit decreases the steering command signal correction value as a value of the signal related to the rotation speed of the pump device increases.

6. The steering device according to claim 4, wherein
the steering command signal correction value adjustment unit adjusts the steering command signal correction value based on a signal related to a temperature of the hydraulic fluid supplied to the first fluid chamber or the second fluid chamber.

7. The steering device according to claim 6, wherein
the steering command signal correction value adjustment unit increases the steering command signal correction value as a value of the signal related to the temperature of the hydraulic fluid supplied to the first fluid chamber or the second fluid chamber decreases.

8. The steering device according to claim 6, wherein
the controller further includes an environmental temperature signal reception unit,
the environmental temperature signal reception unit receives an output signal of a temperature sensor provided in a vehicle, and
the steering command signal correction value adjustment unit adjusts the steering command signal correction value based on the output signal of the temperature sensor.

9. The steering device according to claim 6, wherein
the controller further includes a motor inter-terminal resistance value signal reception unit,
the motor inter-terminal resistance value signal reception unit receives a signal related to an inter-terminal resistance value of an output terminal of the electric motor, and
the steering command signal correction value adjustment unit adjusts the steering command signal correction value based on the signal related to the motor inter-terminal resistance value.

10. The steering device according to claim 4, wherein
the controller further includes a vehicle speed signal reception unit that receives a signal of a vehicle speed, and
the steering command signal correction value adjustment unit increases the steering command signal correction value as the vehicle speed decreases.

11. The steering device according to claim 4, wherein
the controller further includes a load weight signal reception unit that receives a signal related to a load weight,
the signal related to the load weight is a signal related to a weight of a cargo loaded on a loading platform or a cargo compartment of the vehicle, and
the steering command signal correction value adjustment unit increases the steering command signal correction value as the load weight increases.

12. The steering device according to claim 4, further comprising:
a torque sensor, wherein
the torque sensor is provided on the steering shaft and detects a steering torque which is a steering load of a driver,
the controller further includes the steering torque signal reception unit,
the steering torque signal reception unit receives a steering torque signal that is a signal related to the steering torque, and
the steering command signal correction value adjustment unit decreases the steering command signal correction value as the steering torque increases.

13. The steering device according to claim 4, wherein
the controller further includes an air pressure signal reception unit,
the air pressure signal reception unit receives an air pressure signal that is a signal related to air pressure of a tire of the turning wheel, and
the steering command signal correction value adjustment unit increases the steering command signal correction value as the air pressure of the tire of the turning wheel decreases.

14. The steering device according to claim 1, wherein
the controller further includes a turning acceleration signal reception unit and a motor torque signal reception unit,
the turning acceleration signal reception unit receives a signal related to a turning acceleration of the turning wheel,
the motor torque signal reception unit receives a signal related to an output torque of the electric motor,
the steering command signal correction unit includes a steering command signal correction value adjustment unit, and
the steering command signal correction value adjustment unit adjusts the steering command signal correction value based on the signal related to the turning acceleration of the turning wheel and the motor torque signal.

15. The steering device according to claim 1, wherein
the controller further includes a turning angle command signal reception unit and a turning angle signal reception unit,
the turning angle command signal reception unit receives a turning angle command signal that is a signal related to a target turning angle of the turning wheel, and transmits the turning angle command signal to the steering command signal generation unit,
the turning angle signal reception unit receives a turning angle signal that is a signal related to an actual turning angle of the turning wheel,
the motor command signal generation unit includes a feedback control unit, and
the feedback control unit generates the motor command signal by feedback control based on the second steering command signal and the turning angle signal.

16. The steering device according to claim 1, wherein
the steering command signal correction value includes a right-turning steering command signal correction value and a left-turning steering command signal correction value,
the right-turning steering command signal correction value and the left-turning steering command signal correction value have values different from each other, and
the steering command signal correction unit generates the second steering command signal by correcting the first steering command signal based on the right-turning steering command signal correction value when the turning wheel is turned to the right, and generates the second steering command signal by correcting the first steering command signal based on the left-turning steering command signal correction value when the turning wheel is turned to the left.
